# EUROPEAN PATENT SPECIFICATION

(11) **EP 3 379 094 B1**
(45) Date of publication and mention of the grant of the patent: **06.05.2020**
(21) Application number: 16866180.9
(22) Date of filing: 02.11.2016
(51) Int. Cl.: F16C 11/06, F16J 3/04, F16J 15/52

(54) **DUST COVER FOR BALL JOINT AND METHOD FOR ATTACHING DUST COVER FOR BALL JOINT**
STAUBSCHUTZ FÜR KUGELGELENK UND VERFAHREN ZUR BEFESTIGUNG EINES STAUBSCHUTZES FÜR EIN KUGELGELENK
CACHE-POUSSIÈRE POUR JOINT À ROTULE ET PROCÉDÉ DE FIXATION DE CACHE-POUSSIÈRE POUR JOINT À ROTULE

(30) Priority: 20.11.2015 JP 2015228170
(43) Date of publication of application: 26.09.2018
(73) Proprietor: NOK Corporation, Minato-ku Tokyo 105-8585 (JP)
(72) Inventor: KANAGAWA, Koji, Makinohara-shi Shizuoka 421-0532 (JP)
(74) Representative: TBK
(86) International application number: PCT/JP2016/082714
(87) International publication number: WO 2017/086178

(56) References cited:
- WO-A1-02/101250
- DE-A1- 4 113 569
- GB-A- 2 176 235
- JP-A- H1 163 245
- JP-A- H1 163 245
- JP-A- 2003 247 527
- JP-A- 2015 152 058
- JP-U- S58 130 118
- US-A1- 2004 028 302

## Description

### TECHNICAL FIELD

The present invention relates to a dust cover for a ball joint and a method of attaching the dust cover for a ball joint. More specifically, the present invention relates to a dust cover for a ball joint to be mounted on a ball joint in which a knuckle of pinch bolt type having a knuckle groove is fastened and fixed to a shaft of a ball stud, and to a method of attaching the dust cover for the ball joint.

### BACKGROUND

Many ball joints are used in suspension systems and steering systems of automobiles, for example. A ball joint is filled with grease to smooth the motion, and is covered with a dust cover to prevent a leak of the grease and an entry of foreign matter such as water and dust from the outside.

Ball joints are divided broadly into taper alignment ball joints and pinch bolt ball joints depending on how to fasten a knuckle to a ball stud.

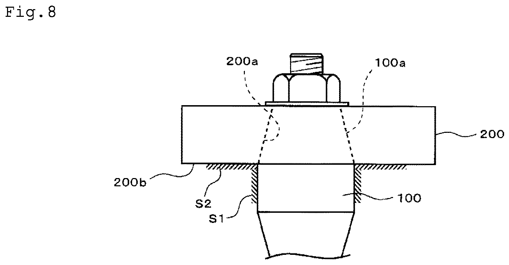

For a taper alignment ball joint, the position of a knuckle 200 is determined so that a tapered outer peripheral surface 100a of a shaft 100 of the ball stud overlaps an inner peripheral surface 200a of the knuckle 200, as illustrated in FIG. 8. In this case, a dust cover seals the shaft 100 and a lower end face 200b of the knuckle 200 by providing seal lip parts so as to come into close contact with both the shaft 100 and the lower end face 200b. Thus, sealed areas by the dust cover are formed extending from the shaft 100 of the ball stud to the lower end face 200b of the knuckle 200, as indicated by signs S1 and S2 in FIG. 8.

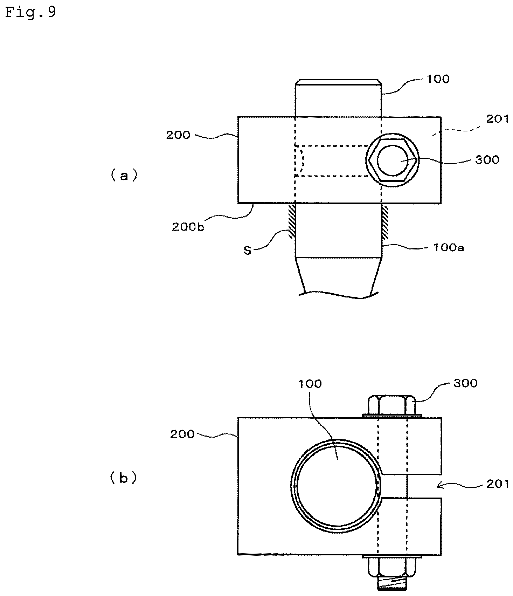

By contrast, a pinch bolt ball joint has a structure in which the knuckle 200 of pinch bolt type is fastened and fixed to the shaft 100 of the ball stud with a bolt 300, as illustrated in FIG. 9(a) and FIG. 9(b). In this case, a knuckle groove (slitting groove) 201 is formed in the knuckle 200, which fails to provide any sealed area of the dust cover to the lower end face 200b of the knuckle 200 in the same manner as the taper alignment ball joint. For this reason, there is only one sealed area formed on the outer peripheral surface 100a of the shaft 100, as indicated by a sign S in the figure, so that the pinch bolt ball joint has such a structure that water or foreign matter enters easily from the knuckle groove 201.

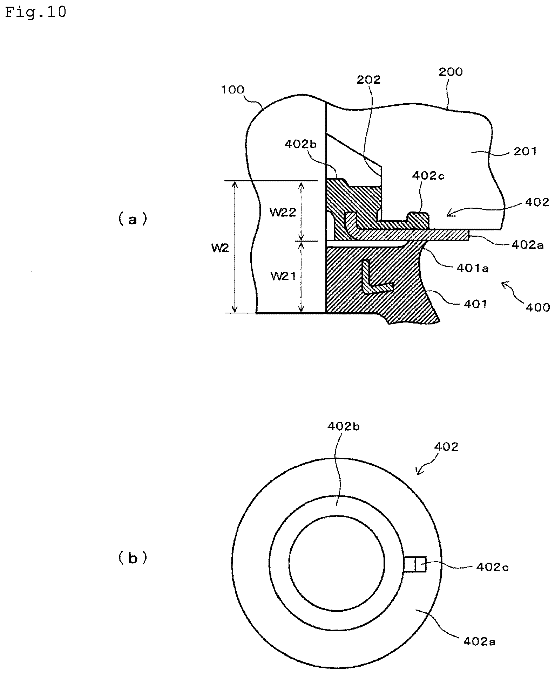

Conventionally, a dust cover 400 has been proposed that includes a dust cover body 401 and an annular plate member 402 as a measure against the above, as illustrated in FIG. 10 (Patent Document 1). FIG. 10(a) is an enlarged sectional view illustrating sealed areas of the dust cover 400. FIG. 10(b) is a plan view of the plate member 402.

The plate member 402 includes an annular board member 402a made of a hard material and an annular sealing part 402b that is integrally formed on the inner peripheral side of the annular board member 402a and is made of a rubber elastic material. The plate member 402 is interposed between the dust cover body 401 and the knuckle 200. The annular sealing part 402b is disposed so as to protrude to the surface on the knuckle 200 side of the annular board member 402a. An annular step 202 to accommodate the annular sealing part 402b is formed in the lower end part on the inner peripheral side of the knuckle 200. The plate member 402 is provided with an engaging projection 402c that is made of a rubber elastic material and that engages with the knuckle groove 201, on the surface on the knuckle 200 side of the annular board member 402a that is located on the outer peripheral side of the annular sealing part 402b. This structure prevents the plate member 402 from rotating with respect to the knuckle 200.

With the dust cover 400, the annular board member 402a of the plate member 402 can block the lower end face side of the knuckle groove 201, which enables a sealed area to be formed on the knuckle 200 side by bringing a seal lip part 401a disposed in the upper end part of the dust cover body 401 into close contact with the lower face of the annular board member 402a. Consequently, the sealed area can be formed extending from the shaft 100 of the ball stud to the knuckle 200 side as in the case of the taper alignment ball joint.

### PRIOR ART DOCUMENTS

### PATENT DOCUMENTS

Patent Document 1: JP-A-2015-152058
Patent Document 2: JP H11 63245

### SUMMARY OF THE INVENTION

### PROBLEM TO BE SOLVED BY THE INVENTION

As described above, the dust cover 400 disclosed in Patent Document 1 enables a seal area to be formed as in the case of the taper alignment ball joint, so that the dust cover 400 produces a beneficial effect of surely preventing an entry of foreign matter. The following new problems, however, have been found as a result of an earnest examination made by the present inventor aiming to further improve the technology.

The conventional dust cover 400 has the plate member 402 between the dust cover body 401 and the knuckle 200, as illustrated in FIG. 10(a), so that a seal width W2 with respect to the shaft 100 of the ball stud corresponds to a normal seal width W21 of the dust cover body 401 alone with a seal width W22 of the annular sealing part 402b of the plate member 402 added thereto. In other words, the seal width is increased by the width of the plate member 402 disposed. In this case, because the length of the shaft 100 protruding from the lower end of the knuckle 200 cannot be changed in terms of design, there is a problem in that the annular step 202 to accommodate the annular sealing part 402b needs to be newly formed in the knuckle 200 in order to absorb the increased width of the seal width W22.

Mounting work of the dust cover 400 is performed by mounting the dust cover body 401 and the plate member 402 to the shaft 100, and then attaching the knuckle 200 to the shaft 100 and fastening the knuckle 200 with the bolt 300. When the knuckle 200 is attached, the plate member 402 is rotated around the shaft and the engaging projection 402c is positioned to be aligned with the position of the knuckle groove 201, and then the knuckle groove 201 pinches and holds the engaging projection 402c. This problematically requires the work of matching the phases of the knuckle groove 201 and the engaging projection 402c when the dust cover 400 is mounted. Patent document 2 discloses a dust cover which does not require a machining of the knuckle, however with reduced sealing properties over lifetime. Typically, ball joints are arranged in a narrow space in many cases, and it is thus desirable to save the work of matching the phase of the plate member 402 with that of the knuckle groove 201 in positioning the plate member 402 in order to further improve workability.

It is an object of the present invention to provide a dust cover for a ball joint, the dust cover including a dust cover body and a plate member, that can minimize the seal width with respect to a shaft of a ball stud and eliminate the need to machine a knuckle, and that can also save the work of matching the phase of the plate member with that of a knuckle groove in positioning the plate member when the dust cover is mounted.

It is another object of the present invention to provide a method of attaching the dust cover for a ball joint by which the work can be saved of matching the phases of the plate member and the knuckle groove when the dust cover is mounted, to easily position the plate member.

Other objects of the present invention will be apparent from the dependent claims.

### MEANS FOR SOLVING PROBLEM

The above-described problems are solved by the appended claims.

### EFFECT OF THE INVENTION

With the present invention, a dust cover for a ball joint, the dust cover including a dust cover body and a plate member, can be provided that can minimize the seal width with respect to a shaft of a ball stud and eliminate the need to machine a knuckle, and that can also save the work of matching the phase of the plate member with that of a knuckle groove in positioning the plate member when the dust cover is mounted.

With the present invention, a method of attaching the dust cover for a ball joint can also be provided, by which the work can be saved of matching the phases of the plate member and the knuckle groove when the dust cover is mounted, to easily position the plate member.

### BRIEF DESCRIPTION OF DRAWINGS

FIG. 1 is a sectional view illustrating an example of a pinch bolt ball joint to which a dust cover for a ball joint according to the present invention is mounted;
FIG. 2 is an exploded sectional view illustrating the dust cover for a ball joint according to the present invention;
FIG. 3 is a plan view of a plate member in the dust cover for a ball joint according to the present invention;
FIG. 4 is a sectional view of main parts of the pinch bolt ball joint to which the dust cover for a ball joint according to the present invention is mounted;
FIG. 5 is an explanatory view illustrating the way the dust cover for a ball joint according to the present invention is mounted on a shaft of a ball stud;
FIG. 6(a) is an explanatory view illustrating the way a knuckle is attached to the shaft of the ball stud to which the dust cover for a ball joint according to the present invention is mounted; FIG. 6(b) is a plan view illustrating the way the knuckle is attached to the shaft of the ball stud to which the dust cover for a ball joint according to the present invention is mounted;
FIG. 7 is an explanatory view illustrating the way outer peripheral petal parts of the plate member are bent in a knuckle groove;
FIG. 8 is a side view of main parts of a taper alignment ball joint;
FIG. 9(a) is a side view of main parts of a pinch bolt ball joint; FIG. 9(b) is a plan view of the main parts of the pinch bolt ball joint;
FIG. 10(a) is a sectional view of main parts of a pinch bolt ball joint to which a conventional dust cover for a ball joint is mounted; and FIG. 10(b) is a plan view of a plate member in the conventional dust cover for a ball joint.

### DESCRIPTION OF THE PREFERRED EMBODIMENTS

The following describes embodiments of the present invention with reference to the drawings.

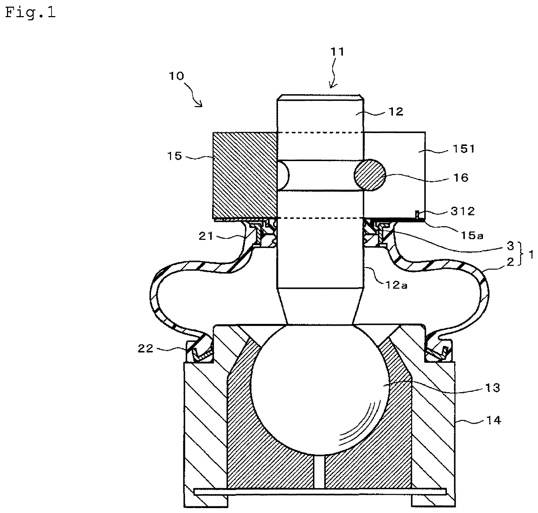

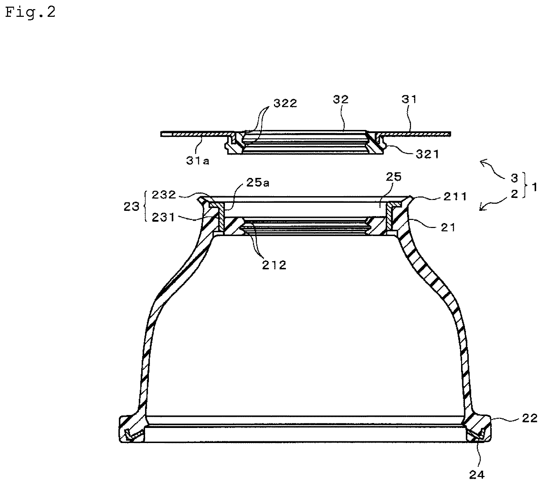

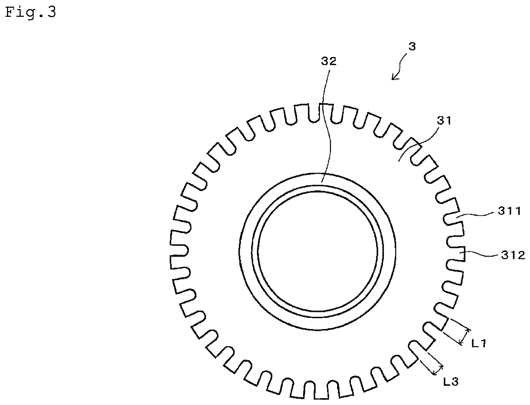

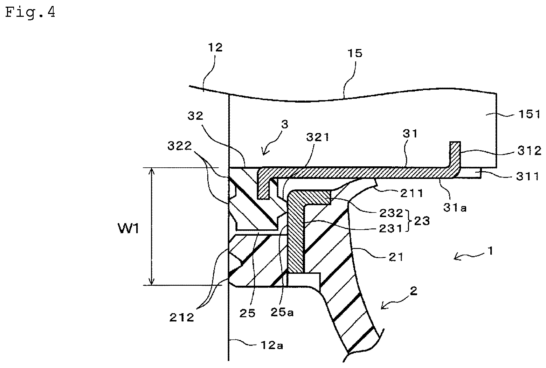

FIG. 1 is a sectional view illustrating an example of a pinch bolt ball joint to which a dust cover for a ball joint according to the present invention is mounted. FIG. 2 is an exploded sectional view illustrating the dust cover for a ball joint according to the present invention. FIG. 3 is a plan view of a plate member in the dust cover for a ball joint according to the present invention. FIG. 4 is a sectional view of main parts of the pinch bolt ball joint to which the dust cover for a ball joint according to the present invention is mounted.

As illustrated in FIG. 1, in a pinch bolt ball joint 10 (hereinafter referred to as the ball joint 10), a spherical head part 13 formed at one end of a shaft 12 of a ball stud 11 is rotatably held in a socket 14. To the shaft 12, a knuckle 15 of pinch bolt type having a knuckle groove 151 is fastened and fixed with a bolt 16. A dust cover for a ball joint 1 according to the present invention (hereinafter referred to as the dust cover 1) is mounted so as to cover the space between a lower end face 15a of the knuckle 15 and the socket 14.

The dust cover 1 includes a dust cover body 2 and a plate member 3 that is interposed between the dust cover body 2 and the knuckle 15, as illustrated in FIG. 2.

The dust cover body 2 is formed of a rubber elastic material in a cup shape. One end (upper end in the figure) of the dust cover body 2 is a stud mounting part 21 into which the shaft 12 of the ball stud 11 is inserted, and the other end (lower end in the figure) thereof is a socket mounting part 22 that is mounted on the upper end part of the socket 14.

The stud mounting part 21 is open having a smaller diameter than that of the socket mounting part 22 so that the shaft 12 of the ball stud 11 is inserted into the stud mounting part 21 and the stud mounting part 21 is slidably mounted on an outer peripheral surface 12a of the shaft 12. A reinforcement ring 23 made of metal or hard synthetic resin is disposed in the stud mounting part 21. The socket mounting part 22 is open having a larger diameter than that of the stud mounting part 21 so as to be fixed to the socket 14. A reinforcement ring 24 made of metal or hard synthetic resin is buried in the socket mounting part 22.

In the upper end outer peripheral part of the stud mounting part 21, an annular seal lip part 211 (first seal lip part) is formed to protrude obliquely outward that comes into close contact with the plate member 3 for sealing. On the inner peripheral surface of the stud mounting part 21, seal lip parts 212 (third seal lip parts) are formed that come into close contact with the outer peripheral surface 12a of the stud 12 for sealing.

Furthermore, on the inner peripheral side of the reinforcement ring 23, an annular step 25 is formed having a shape of being cut out annularly at a certain depth from above (the knuckle 15 side). Thus, the stud mounting part 21 is open in a shape having a portion of relatively large diameter in which the annular step 25 is formed and a portion of relatively small diameter that is integrally connected to the lower part of the annular step 25. The portion of small diameter is a part that comes into contact with the outer peripheral surface 12a of the shaft 12 and in which the seal lip parts 212 is formed. The seal lip parts 212 are formed to have a slightly smaller inside diameter than the diameter of the shaft 12 so as to come into close contact with the outer peripheral surface 12a of the shaft 12.

In the present embodiment, the reinforcement ring 23 shows a preferred mode in which a cylindrical part 231 running along the shaft 12 of the ball stud 11 and a flange 232 overhanging toward the outside in the upper end part of the cylindrical part 231 are included to be formed in an inverted-L shape in section. In the reinforcement ring 23, substantially half of the cylindrical part 231 on the lower end side is arranged in the rubber elastic material that constitutes the stud mounting part 21. The inner peripheral surface on the upper end side of the cylindrical part 231 is exposed in the annular step 25. In other words, an inner peripheral surface 25a of the annular step 25 is defined by the inner peripheral surface of the cylindrical part 231 in the reinforcement ring 23.

Meanwhile, the plate member 3 includes a plate body 31 and an annular sealing part 32.

The plate body 31 is made of an annular board member having a larger diameter than the outside diameter of the stud mounting part 21 in the dust cover body 2, specifically, than the outside diameter of the seal lip part 211. The plate body 31 is formed to have a slightly larger inside diameter than the diameter of the shaft 12.

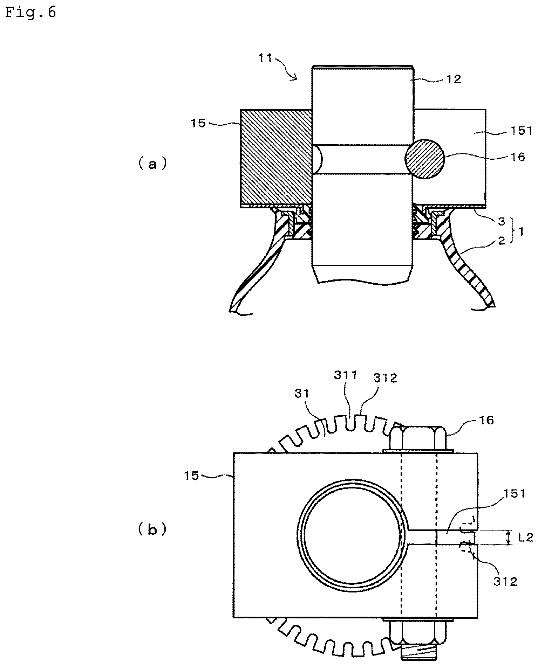

In the outer periphery of the plate body 31, a plurality of cut parts 311 are formed at a fixed interval, as illustrated in FIG. 3. Thus, the plate body 31 has the shape of a toothed wheel, and portions between adjacent cut parts 311, 311 are outer peripheral petal parts 312. A width L1 of each outer peripheral petal part 312 in the circumferential direction is set to be the same as or slightly smaller than a width L2 (see FIG. 6(b)) of the knuckle groove 151 so as to be capable of being engaged with the knuckle groove 151 with the knuckle 15 fastened and fixed to the shaft 12 with the bolt 16.

The outer peripheral petal parts 312 of the plate body 31 are structured to be capable of being easily bent by hand by using an appropriate jig such as a screwdriver so as to be engaged with the knuckle groove 151. Preferably, the plate body 31 itself can be bent and is made of a material that can maintain the bent state once it is bent. Specific examples of the material include a cold-reduced carbon steel sheet (SPCC material) and a stainless steel material (SUS material).

Although the illustrated cut parts 311 are formed by the respective U-shaped cut out grooves in plan view, the cut parts 311 may be narrower slits and the specific shape thereof does not matter. However, a width L3 of each cut part 311 in the circumferential direction is preferably smaller than the width L1 of the outer peripheral petal part 312. Because a large number of outer peripheral petal parts 312 can be formed in the plate body 31, any of the outer peripheral petal parts 312 is arranged all the more easily in the position corresponding to the knuckle groove 151, which allows workability to be more favorable in bending the outer peripheral petal parts 312 to be engaged with the knuckle groove 151.

The annular sealing part 32 is made of the same rubber elastic material as the dust cover body 2, and is disposed in the inner peripheral part of the plate body 31 so as to protrude toward the dust cover body 2 side. The annular sealing part 32 is accommodated in the annular step 25 of the dust cover body 2 with the dust cover 1 mounted on the ball joint 10, as illustrated in FIG. 1 and FIG. 4.

The annular sealing part 32 does not protrude to the knuckle 15 side, and the surface on the knuckle 15 side of the plate member 3 is formed to be flush with the lower end face 15a of the knuckle 15 extending from the plate body 31 to the annular sealing part 32 so that the flat surface of the plate member 3 can be brought into close contact with the flat surface of the lower end face 15a.

A seal lip part 321 (second seal lip part) is formed on the outer peripheral surface of the annular sealing part 32. The seal lip part 321 is formed to have a slightly larger outside diameter than the inside diameter of the annular step 25 in the dust cover body 2. Consequently, the seal lip part 321 comes into close contact with the inner peripheral surface 25a of the annular step 25 for sealing.

Seal lip parts 322 (fourth seal lip parts) are formed on the inner peripheral surface of the annular sealing part 32. The seal lip parts 322 are formed to have an inside diameter equal to the inside diameter of the seal lip parts 212 in the stud mounting part 21 of the dust cover body 2. Consequently, the seal lip parts 322 come into close contact with the outer peripheral surface 12a of the shaft 12 for sealing.

When the dust cover 1 structured as described above is mounted on the ball joint 10, the annular sealing part 32 of the plate member 3 is accommodated in the annular step 25 of the dust cover body 2 so as not to protrude toward the knuckle 15 side. This structure requires no need of adding an annular step for accommodating the annular sealing part to the knuckle as in the conventional example illustrated in FIG. 10(a).

Because the dust cover 1 has a structure in which the annular sealing part 32 of the plate member 3 is accommodated in the annular step 25 of the dust cover body 2, as illustrated in FIG. 4, a seal width W1 with respect to the outer peripheral surface 12a of the shaft 12 is substantially no more than the axial width of the stud mounting part 21, enabling the seal width W1 to be minimized. Consequently, while the dust cover 1 includes the dust cover body 2 and the plate member 3, the seal width W1 with respect to the shaft 12 is no more than the seal width W21 of the conventional dust cover body 401 illustrated in FIG. 10(a), which can reduce the seal width W1 to be no more than the seal width in the conventional dust cover in which no plate member is disposed. For this reason, the position of the stud mounting part 21 with respect to the shaft 12 is not shifted to the socket 14 side compared with the conventional dust cover, nor is the internal volume of the dust cover 1 reduced.

Furthermore, because a plurality of outer peripheral petal parts 312 of the plate member 3 can be bent, any of the outer peripheral petal parts 312 located in the position corresponding to the knuckle groove 151 can be bent to the knuckle groove 151 side to be engaged with the knuckle groove 151. This work can be performed after the knuckle 5 is fastened and fixed to the shaft 12. Additionally, the plate member 3 does not need to be rotated to a large extent in order to match the phases of the knuckle groove 151 and the outer peripheral petal part 312. This can eliminate the work of matching the phase of the plate member 3 with that of the knuckle groove 151 by rotating the plate member 3 as in the conventional example when the plate member 3 is positioned, thereby substantially improving workability in mounting the dust cover.

As illustrated in FIG. 4, with the annular sealing part 32 accommodated in the annular step 25, the seal lip part 211 of the dust cover body 2 comes into close contact with a lower face 31a of the plate body 31 in the plate member 3 to form a sealed area, and the seal lip part 321 of the plate member 3 comes into close contact with the inner peripheral surface 25a of the annular step 25 in the dust cover body 2 to form a sealed area. In other words, entry paths of water or foreign matter from the outside to the inside of the dust cover 1 are blocked in two places of the seal lip part 211 and the seal lip part 321. Consequently, if water or foreign matter should pass through the outer seal lip part 211, the inner seal lip part 321 can prevent water or foreign matter from entering the inside of the dust cover 1. The double sealed areas can enhance the effect of preventing an entry of foreign matter. Moreover, sealed areas to the shaft 12 are also made up of the double sealed areas of the seal lip parts 212 and 322, thereby enhancing the effect of preventing an entry of foreign matter along the shaft 12.

In the present embodiment, the inner peripheral surface 25a of the annular step 25 with which the seal lip part 321 of the annular sealing part 32 comes into close contact is not made of a rubber elastic material but of the hard reinforcement ring 23, thereby achieving stable sealing by the seal lip part 321.

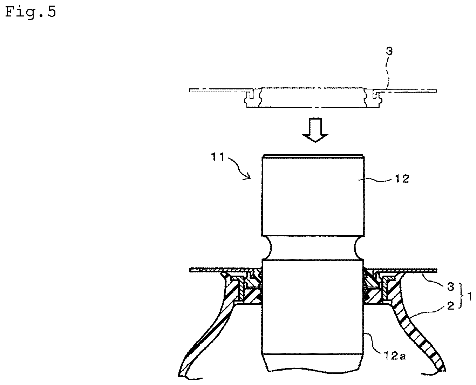

The following describes a method of attaching the dust cover 1 to the ball joint 10 with reference to FIG. 5 to FIG. 7.

First, the dust cover body 2 and the plate member 3 are mounted on the shaft 12 of the ball stud 11, as illustrated in FIG. 5. The annular sealing part 32 of the plate member 3 is accommodated in the annular step 25 of the dust cover body 2 at this time.

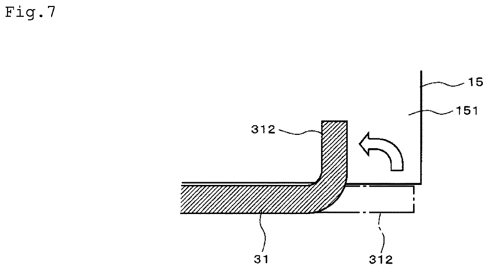

Next, the knuckle 15 is attached to the upper end part of the shaft 12 so as to sandwich the plate member 3 with the dust cover body 2, and is fastened and fixed with the bolt 16, as illustrated in FIG. 6. Of a plurality of outer peripheral petal parts 312 in the plate member 3, a outer peripheral petal part 312 located in the position corresponding to the knuckle groove 151 is then bent to the knuckle 15 side by using an appropriate jig such as a screwdriver, to be engaged with the knuckle groove 151, as illustrated in FIG. 7. In this way, the plate member 3 is positioned unrotatably to the knuckle 15.

By this method of attaching the dust cover 1, the plate member 3 can be positioned after the knuckle 15 is fastened and fixed to the shaft 12. Because the phase of the plate member 3 does not need to be matched for positioning by rotating the plate member 3, the plate member 3 can be positioned easily.

### EXPLANATIONS OF LETTERS OR NUMERALS

- 10:: pinch bolt ball joint
- 11:: ball stud
- 12:: shaft
- 12a:: outer peripheral surface
- 13:: spherical head part
- 14:: socket
- 15:: knuckle
- 15a:: lower end face
- 151:: knuckle groove
- 16:: bolt
- 1:: dust cover
- 2:: dust cover body
- 21:: stud mounting part
- 211:: seal lip part (first seal lip part)
- 212:: seal lip parts (third seal lip parts)
- 22:: socket mounting part
- 23:: reinforcement ring
- 231:: cylindrical part
- 232:: flange
- 24:: reinforcement ring
- 25:: annular step
- 25a:: inner peripheral surface
- 3:: plate member
- 31:: plate body
- 311:: cut parts
- 312:: outer peripheral petal parts
- 32:: annular sealing part
- 321:: seal lip part (second seal lip part)
- 322:: seal lip parts (fourth seal lip parts)

## Claims

1. A dust cover for a ball joint (1) to be mounted on a ball joint (10) in which a knuckle (15) of pinch bolt type having a knuckle groove (151) is fastened and fixed to a shaft (12) of a ball stud (11), the dust cover for a ball joint (1) comprising:
a dust cover body (2) made of a rubber elastic material; and
an annular plate member (3) that is configured to be interposed between the dust cover body (2) and the knuckle (15), wherein
in the dust cover body (2), a reinforcement ring (23) is disposed in a stud mounting part (21) that is configured to be mounted on an outer peripheral surface (12a) of the shaft (12), and on an inner peripheral side of the reinforcement ring (23), an annular step (25) is formed having a shape of being cut out at a certain depth from the knuckle side,
the plate member (3) includes a plate body (31) and an annular sealing part (32), the annular sealing part (32), being made of a rubber elastic material, disposed on an inner peripheral side of the plate body (31), and is configured to be accommodated in the annular step (25) of the dust cover body (2), and
in an outer periphery of the plate body (31), a plurality of cut parts (311) are formed, so that outer peripheral petal parts (312) are formed between adjacent cut parts (311) configured to be bent so as to engage with a knuckle groove (151).

2. The dust cover for a ball joint (1) according to claim 1, wherein an upper end outer peripheral part of the stud mounting part (21) in the dust cover body (2) has a first seal lip part (211) for sealing a space with a lower face (31a) of the plate body (31) in the plate member (3), and an outer peripheral surface of the annular sealing part (32), in the plate member (3) has a second seal lip part (321) for sealing a space with an inner peripheral surface of the annular step (25).

3. The dust cover for a ball joint (1) according to claim 2, wherein
the reinforcement ring (23) is exposed to the annular step (25), and
the second seal lip part (321) seals a space with an inner peripheral surface of the reinforcement ring (23) that is exposed to the annular step (25).

4. The dust cover for a ball joint (1) according to claims 1, 2, or 3, wherein an inner peripheral surface of the stud mounting part (21) in the dust cover body (2) has a third seal lip part (212) for sealing a space with the outer peripheral surface (12a) of the shaft (12).

5. The dust cover for a ball joint (1) according to any one of claims 1 to 4, wherein an inner peripheral surface of the annular sealing part (32), in the plate member (3) has a fourth seal lip part (322) for sealing a space with the outer peripheral surface (12a) of the shaft (12).

6. A method of attaching the dust cover for a ball joint (1) as claimed in any one of claims 1 to 5 on a ball joint (10) and a knuckle (15), the method comprising:
after mounting the dust cover body (2) and the plate member (3) to the shaft (12), attaching the knuckle (15) to the shaft (12) so as to sandwich the plate member (3) with the dust cover body (2); and
positioning the plate body (31) with respect to the knuckle (15) by bending, of a plurality of outer peripheral petal parts (312) formed in the plate body (31) of the plate member (3), an outer peripheral petal part (312) located in a position corresponding to the knuckle groove (151) so as to be engaged with the knuckle groove (151).

## Patentansprüche

1. Staubabdeckung für ein Kugelgelenk (1), die an einem Kugelgelenk (10) zu montieren ist, in welchem ein Achsschenkel (15) der Klemmbolzenart mit einer Achsschenkelnut (151) an einer Welle (12) eines Kugelbolzens (11) befestigt und fixiert ist, wobei die Staubabdeckung für ein Kugelgelenk (1) aufweist:
einen Staubabdeckkörper (2), der aus einem elastischen Gummiwerkstoff hergestellt ist; und
ein ringförmiges Plattenbauteil (3), das konfiguriert ist, zwischen dem Staubabdeckkörper (2) und dem Achsschenkel (15) angeordnet zu sein, wobei
in dem Staubabdeckkörper (2) ein Verstärkungsring (23) in einem Bolzenmontierteil (21) angeordnet ist, der konfiguriert ist, an einer Außenumfangsfläche (12a) der Welle (12) montiert zu sein, und auf einer Innenumfangsseite des Verstärkungsrings (23) eine ringförmige Stufe (25) ausgebildet ist, die eine Form hat, bei der sie mit einer vorbestimmten Tiefe von der Achsschenkelseite ausgeschnitten ist,
das Plattenbauteil (3) einen Plattenkörper (31) und ein ringförmiges Dichtungsteil (32) hat, wobei das ringförmige Dichtungsteil (32) aus einem elastischen Gummiwerkstoff hergestellt, auf einer Innenumfangsseite des Plattenkörpers (31) angeordnet und konfiguriert ist, in der ringförmigen Stufe (25) des Staubabdeckkörpers (2) aufgenommen zu sein, und
in einem Außenumfang des Plattenkörpers (31) eine Vielzahl von ausgeschnittenen Teilen (311) ausgebildet sind, sodass Außenumfangskronenteile (312) zwischen benachbarten ausgeschnittenen Teilen (311) ausgebildet sind, die konfiguriert sind, so gebogen zu sein, dass sie mit einer Achsschenkelnut (151) in Eingriff kommen.

2. Staubabdeckung für ein Kugelgelenk (1) nach Anspruch 1, wobei ein Oberendenaußenumfangsteil des Bolzenaufnahmeteils (21) in dem Staubabdeckkörper (2) einen ersten Dichtlippenteil (211) zum Abdichten eines Raums mit einer unteren Fläche (31a) des Plattenkörpers (31) in dem Plattenbauteil (3) hat, und eine Außenumfangsfläche des ringförmigen Abdichtungsteils (32) in dem Plattenbauteil (3) einen zweiten Dichtlippenteil (321) zum Abdichten eines Raums mit einer Innenumfangsfläche der ringförmigen Stufe (25) hat.

3. Staubabdeckung für ein Kugelgelenk (1) nach Anspruch 2, wobei
der Verstärkungsring (23) zu der ringförmigen Stufe (25) freigestellt ist, und
der zweite Dichtlippenteil (321) einen Raum mit einer Innenumfangsfläche des Verstärkungsrings (23) abdichtet, die zu der ringförmigen Stufe (25) freigestellt ist.

4. Staubabdeckung für ein Kugelgelenk (1) nach Anspruch 1, 2 oder 3, wobei eine Innenumfangsfläche des Bolzenaufnahmeteils (21) in dem Staubabdeckkörper (2) einen dritten Dichtlippenteil (212) zum Abdichten eines Raums mit der Außenumfangsfläche (12a) der Welle (12) hat.

5. Staubabdeckung für ein Kugelgelenk (1) nach einem der Ansprüche 1 bis 4, wobei eine Innenumfangsfläche des ringförmigen Dichtungsteils (32) in dem Plattenbauteil (3) einen vierten Dichtlippenteil (322) zum Abdichten eines Raums mit der Außenumfangsfläche (12a) der Welle (12) hat.

6. Verfahren zum Anbringen der Staubabdeckung für ein Kugelgelenk (1), wie sie in einem der Ansprüche 1 bis 5 beansprucht ist, auf ein Kugelgelenk (10) und einen Achsschenkel (15), das Verfahren mit:
Anbringen des Achsschenkels (15) an der Welle (12) nach dem Montieren des Staubabdeckkörpers (2) und des Plattenbauteils (3) an der Welle (12), um das Plattenbauteil (3) mit dem Staubabdeckkörper (2) zu umschließen; und
Positionieren des Plattenkörpers (31) mit Bezug auf den Achsschenkel (15), indem, aus einer Vielzahl von Außenumfangskronenteilen (312), die in dem Plattenkörper (31) des Plattenbauteils (3) ausgebildet sind, ein Außenumfangskronenteil (312) gebogen wird, der in einer Position gelegen ist, die der Achsschenkelnut (151) entspricht, sodass der Außenumfangskronenteil (312) mit der Achsschenkelnut (151) in Eingriff steht.

## Revendications

1. Cache-poussière pour un joint à rotule (1) destiné à être monté sur un joint à rotule (10) dans lequel est fixée une fourche (15) du type à boulon de pincement ayant une rainure de fourche (151) et fixée à un arbre (12) d'un pivot à rotule (11), le cache-poussière pour un joint à rotule (1) comprenant :
un corps de cache-poussière (2) réalisé avec un matériau élastique en caoutchouc ; et
un élément de plaque annulaire (3) qui est configuré pour être intercalé entre le corps de cache-poussière (2) et la fourche (15), dans lequel :
dans le corps de cache-poussière (2), une bague de renforcement (23) est disposée dans une partie de montage de pivot (21) qui est configurée pour être montée sur une surface périphérique externe (12a) de l'arbre (12), et sur un côté périphérique interne de la bague de renforcement (23), un gradin annulaire (25) est formé, ayant une forme selon laquelle il est coupé à une certaine profondeur du côté de la fourche,
l'élément de plaque (3) comprend un corps de plaque (31) et une partie d'étanchéité annulaire (32), la partie d'étanchéité annulaire (32) étant réalisée avec un matériau élastique en caoutchouc disposé sur un côté périphérique interne du corps de plaque (31), et est configuré pour être logé dans le gradin annulaire (25) du corps de cache-poussière (2), et
dans une périphérie externe du corps de plaque (31), une pluralité de parties découpées (311) sont formées, de sorte que des parties de pétale périphériques (312) sont formées entre les parties découpées (311) adjacentes configurées pour être pliées afin de se mettre en prise avec une rainure de fourche (151).

2. Cache-poussière pour un joint à rotule (1) selon la revendication 1, dans lequel une partie périphérique externe d'extrémité supérieure de la partie de montage de pivot (21) dans le corps de cache-poussière (2) a une première partie de lèvre de joint d'étanchéité (211) pour sceller un espace avec une face inférieure (31a) du corps de plaque (31) dans l'élément de plaque (3), et une surface périphérique externe de la partie d'étanchéité annulaire (32), dans l'élément de plaque (3) a une seconde partie de lèvre de joint d'étanchéité (321) pour sceller un espace avec une surface périphérique interne du gradin annulaire (25) .

3. Cache-poussière pour un joint à rotule (1) selon la revendication 2, dans lequel :
la bague de renforcement (23) est exposée au gradin annulaire (25), et
la deuxième partie de lèvre de joint d'étanchéité (321) scelle un espace avec une surface périphérique interne de la bague de renforcement (23) qui est exposée au gradin annulaire (25) .

4. Cache-poussière pour un joint à rotule (1) selon les revendications 1, 2 ou 3, dans lequel une surface périphérique interne de la partie de montage de pivot (21) dans le corps de cache-poussière (2) a une troisième partie de lèvre de joint d'étanchéité (212) pour sceller un espace avec la surface périphérique externe (12a) de l'arbre (12).

5. Cache-poussière pour un joint à rotule (1) selon l'une quelconque des revendications 1 à 4, dans lequel une surface périphérique interne de la partie d'étanchéité annulaire (32), dans l'élément de plaque (3), a une quatrième partie de lèvre de joint d'étanchéité (322) pour sceller un espace avec la surface périphérique externe (12a) de l'arbre (12).

6. Procédé pour fixer le cache-poussière pour un joint à rotule (1) selon l'une quelconque des revendications 1 à 5 sur un joint à rotule (10) et une fourche (15), le procédé comprenant les étapes suivantes :
après le montage du corps de cache-poussière (2) et de l'élément de plaque (3) sur l'arbre (12), fixer la fourche (15) sur l'arbre (12) afin de prendre en sandwich l'élément de plaque (3) avec le corps de cache-poussière (2) ; et
positionner le corps de plaque (31) par rapport à la fourche (15) en pliant une pluralité de parties de pétale périphériques externes (312) formées dans le corps de plaque (31) de l'élément de plaque (3), une partie de pétale périphérique externe (312) étant positionnée dans une position correspondant à la rainure de fourche (151) afin d'être mise en prise avec la rainure de fourche (151).
